# EUROPÄISCHE PATENTANMELDUNG

(11) **EP 1 117 236 A2**
(43) Veröffentlichungstag der Anmeldung: **18.07.2001**
(21) Anmeldenummer: 00440327.5
(22) Anmeldetag: 13.12.2000
(51) Int. Cl.: H04M 3/428

(54) **Behandlung ankommender Telefonanrufe während einer Online-Datennetzwerk-Sitzung**

(30) Priorität: 12.01.2000 DE 10000826
(71) Anmelder: ALCATEL, 75008 Paris (FR)
(72) Erfinder: Shen, Yuzhong, 70499 Stuttgart (DE); Kaisser, Bernhard Dr., 71665 Vaihingen/Enz (DE); Glasner-Schapeler, Ingrid, 71229 Leonberg (DE); Piepkorn, Peter, 71732 Tamm (DE); Orlamünder, Harald, 71254 Ditzingen (DE)
(74) Vertreter: Brose, Gerhard

(57) **Zusammenfassung**

Die Erfindung betrifft ein Verfahren, sowie einen Dienstrechner, eine Vermittlungsstelle, Endgeräte, Programm-Module und Speichermittel mit Programm-Modulen zur Behandlung ankommender Telefonanrufe für eine Teilnehmeranschlussleitung (VA1) eines Telekommunikationsnetzes (PSTN) während einer die Teilnehmeranschlussleitung (VA1) blockierenden Online-Datennetzwerk-Sitzung. Dabei baut ein Endgerät (TERA) eine Verbindung (VA11, VA1, VPOP) zu einer Online-Datennetzwerk-Zugangseinrichtung (POP) über die Teilnehmeranschlussleitung (VA1) auf. Daraufhin sendet die Online-Datennetzwerk-Zugangseinrichtung (POP) dem Endgerät (TERA) aktuelle Zugangsdaten, die das Endgerät (TERA) einem Diensterechner (SCP) des Telekommunikationsnetzes meldet. Wenn dann eine Vermittlungsstelle (SW1) des Telekommunikationsnetzes einen für die Teilnehmeranschlussleitung (VA1) bestimmten ankommenden Anruf feststellt, meldet dann die Vermittlungsstelle (SW1) das Bereitstehen dieses Anrufes an den Diensterechner (SCP), welcher zumindest einen vorherbestimmten Dienst zur Bearbeitung des ankommenden Anrufes erbringt. Der Dienst kann beispielsweise darin bestehen, dass eine Meldung an das Endgerät (TERA) gesendet, in der auf den ankommenden Anruf hingewiesen wird oder dass der ankommende Anruf an ein alternatives Ziel (TELA2) umgeleitet wird.

## Beschreibung

Die vorliegende Erfindung betrifft ein Verfahren gemäß dem Oberbegriff des Anspruchs 1, sowie einen Diensterechner gemäß dem Oberbegriff des Anspruchs 10 hierfür, eine Vermittlungsstelle gemäß dem Oberbegriff des Anspruchs 11 hierfür, ein Endgerät gemäß dem Oberbegriff des Anspruchs 12 hierfür, ein Endgerät gemäß dem Oberbegriff des Anspruchs 13 hierfür, ein Zugangsdaten-Sende-Programm-Modul gemäß dem Oberbegriff des Anspruchs 14 und ein Programm-Modul gemäß dem Oberbegriff des Anspruchs 15 hierfür.

Wenn ein typischer End-Teilnehmer mit seinem Endgerät, üblicherweise mit einem Personal Computer, eine Online-Verbindung zu einem Datennetzwerk, insbesondere zum Internet aufbaut, benutzt er dazu zumeist die Dienste eines öffentlichen Telefonnetzwerkes, auch als PSTN (Public Switched Telephone Network) bezeichnet. Der Teilnehmer schließt dann sein Endgerät z.B. über ein Modem oder einen ISDN-Adapter (ISDN = Integrated Services Digital Network) an die zu seiner Wohnung führende Teilnehmeranschlussleitung an und wählt an dem Endgerät die Nummer einer Zugangseinrichtung zum Internet. Das öffentliche Telefonnetzwerk stellt dann die Verbindung zwischen dem Endgerät und der Zugangseinrichtung her, so dass der Teilnehmer mit seinem Endgerät "online" ist. Während die Online-Sitzung über die Teilnehmeranschlussleitung unterhalten wird, kann der Teilnehmer jedoch lediglich über das Internet, beispielsweise über E-Mails, erreicht werden. Eine weitere Verbindung Dritter zu dem Teilnehmer, z.B. über Telefon ist nicht möglich. Ein möglicher Kommunikationspartner, der den Teilnehmer anruft, erhält dann ein "Besetzt"-Zeichen.

Zwar kann der Teilnehmer, bevor er die Online-Verbindung aufbaut, evtl. eine Rufumleitung zu einem alternativen Ziel für den Besetztfall ("Call Forwarding Busy") für seinen Teilnehmeranschluss einrichten, so dass ein eventuell ankommender Ruf während Online-Sitzung zu einem alternativen Kommunikationspartner umgeleitet wird, der dann anstatt dem eigentlich gewünschten Teilnehmer den Ruf entgegennimmt. Oder, als eine weitere Alternative kann der Ruf auch zu einem in dem öffentlichen Telefonnetzwerk liegenden Anrufbeantworter-Einrichtung ("Voicebox") umgeleitet wird und der Kommunikationswunsch des Anrufenden zumindest teilweise zufrieden gestellt wird. Der Teilnehmer jedoch erhält in beiden Fällen während seiner Online-Sitzung keinerlei Information, dass ein Anruf für ihn entgegengenommen worden ist. Weiterhin muss der Teilnehmer die Rufumleitung vor jeder Online-Sitzung umständlich einrichten und anschließend wieder ebenso umständlich deaktivieren, wenn er nicht dauerhaft auf die Entgegennahme von Anrufen verzichten will, sowie gegebenenfalls auch die Voicebox abfragen. Zusätzlich werden bei der dargestellten Lösung mit Rufumleitung große Ressourcen des Telekommunikationsnetzes belegt, weil ein ankommender Ruf nicht nur bis zu der Ortsvermittlungsstelle durchgestellt werden muss, an die die Teilnehmeranschlussleitung des im Internet "surfenden" Teilnehmers angeschlossen wird, sondern von dieser Ortsvermittlungsstelle auch noch bis zu der Anrufbeantworter-Einrichtung.

Es ist daher Aufgabe der Erfindung, ankommende Telefonanrufe für eine Teilnehmeranschlussleitung eines Telekommunikationsnetzes komfortabel und effizient zu behandeln, während die Teilnehmeranschlussleitung durch eine Online-Datennetzwerk-Sitzung eines Endgerätes blockiert ist.

Diese Aufgabe wird durch ein Verfahren gemäß der technischen Lehre des Anspruchs 1, sowie einen Diensterechner gemäß der technischen Lehre des Anspruchs 10, eine Vermittlungsstelle gemäß der technischen Lehre des Anspruchs 11, ein Endgerät gemäß der technischen Lehre des Anspruchs 12, ein Endgerät gemäß der technischen Lehre des Anspruchs 13, ein Zugangsdaten-Sende-Programm-Modul gemäß der technischen Lehre des Anspruchs 14 und ein Programm-Modul gemäß dem Oberbegriff des Anspruchs 15 gelöst. Weitere vorteilhafte Ausgestaltungen der Erfindung sind den abhängigen Ansprüchen und der Beschreibung zu entnehmen.

Der Erfindung liegt dabei der Gedanke zugrunde, dass von einem Teilnehmer mit einem Endgerät, beispielsweise einem Personal Computer, zunächst in bekannter Weise über eine Teilnehmeranschlussleitung eines öffentlichen Telekommunikationsnetzes eine Online-Verbindung zu einer Zugangseinrichtung eines Online-Datennetzwerkes, insbesondere des Internets, aufgebaut wird, die Zugangseinrichtung dem Endgerät die für den aktuellen Internetzugang benötigten Zugangsdaten versendet. Erfindungsgemäß meldet das Endgerät dann diese Zugangsdaten einem Diensterechner des Telekommunikationsnetzes, der mit Hilfe dieser Zugangsdaten Dienste zur Behandlung ankommender Anrufe für die nunmehr durch die Online-Verbindung belegte Teilnehmeranschlussleitung bereitstellen kann. Wenn dann ein Anruf für die belegte Teilnehmeranschlussleitung eingeht, benachrichtigt die Vermittlungsstelle des Telekommunikationsnetzes, die den Anruf aufgrund der Belegung nicht durchstellen kann, den Diensterechner, dass ein Anruf bereitsteht. Zur Auslösung der Nachricht wird dazu dauerhaft oder jeweils beim Aufbau der Online-Verbindung beispielsweise ein sogenannter Triggerpunkt in der Vermittlungsstelle in deren Rufsteuerung gesetzt. Bei der Vermittlungsstelle kann es sich beispielsweise um eine Ortsvermittlungsstelle handeln, die die Teilnehmeranschlussleitung bedient oder auch um eine beliebige andere Vermittlungsstelle des Telekommunikationsnetzes, die erkennt, dass der Anruf für die Teilnehmeranschlussleitung nicht durchstellbar ist. Der Diensterechner erbringt dann einen vorbestimmten Dienst, zur Behandlung des nicht durchstellbaren Anrufes. Besonders vorteilhaft erweist es sich dabei, dass der Anruf von der Vermittlungsstelle nicht von vornherein zu einem bestimmten Ziel von der Vermittlungsstelle weitergeleitet werden muss, sondern zunächst von der Vermittlungsstelle in Wartestellung gehalten wird. Dadurch belastet der Anruf zum einen keinerlei weitere Ressourcen in dem Telekommunikationsnetz und zum anderen kann der Anruf in einer der nachfolgenden Varianten weiterbehandelt werden.

Der Diensterechner kann beispielsweise über das Online-Datennetzwerk eine Nachricht an das Endgerät schicken, dass ein Anruf für den Teilnehmer bereitsteht. Der Teilnehmer kann dann z.B. seine Online-Sitzung abbrechen und den wartenden Anruf entgegennehmen. Dabei werden keinerlei weitere Netzressourcen für eine eventuelle Rufumleitung des bereitstehenden Anrufes benötigt.

Der Diensterechner kann auch die Vermittlungsstelle dazu anweisen, den Anruf zu einem vorbestimmten alternativen Ziel umzuleiten, z.B. zu einer Voicebox innerhalb des Telekommunikationsnetzes oder zu einem Mobilfunk-Endgerät des Teilnehmers. Insbesondere wenn nicht erst die die belegte Teilnehmeranschlussleitung bedienende Ortsvermittlungsstelle den Anruf bereithält, sondern eine bereits dieser Ortsvermittlungsstelle vorgelagerte Vermittlungsstelle, werden bei der anschließenden Rufumleitung durch die Vermittlungsstelle wertvolle Ressourcen des Telekommunikationsnetzes geschont, da der Anruf gar nicht erst bis zu der Ortsvermittlungsstelle gelangt.

In einer weiteren Variante kann der Diensterechner die Vermittlungsstelle dazu anweisen, den Anruf als sogenannten "Voice over Internet Protocol"-Ruf (VoIP) über ein sogenanntes Gateway in das Online-Datennetzwerk umzuleiten. Dieses routet dann den VoIP-Anruf wieder zurück zu dem Endgerät, das dann im Rahmen der dort laufenden Online-Sitzung den VoIP-Anruf entgegennimmt. Der Teilnehmer ist somit ohne eine aufwendige Rufumleitung und ohne seine Online-Sitzung zu unterbrechen stets erreichbar.

Die oben beschriebenen Varianten der Rufbehandlung können zwar in dem Diensterechner nach Wunsch des Teilnehmers fest eingestellt sein. Es ist aber auch möglich, dass dem Endgerät des Teilnehmers von dem Diensterechner über das Online-Datennetzwerk ein Auswahlmenü gesendet wird, aus dem der Teilnehmer dann eine der obengenannten Varianten auswählt. Das Endgerät benachrichtigt dann den Diensterechner, welche Variante der Teilnehmer ausgewählt hat, damit dieser den gewünschten Dienst erbringen kann. Dem Teilnehmer wird also bequem und komfortabel ein ganzes Bündel von Diensten angeboten.

Es kann zwar so vorbestimmt sein, dass die Vermittlungsstelle immer dann, wenn ein Anruf für die - durch die Online-Verbindung oder eine sonstige Rufverbindung - belegte Teilnehmeranschlussleitung bei der Vermittlungsstelle ankommt, den Diensterechner um einen Dienst zur Behandlung des ankommenden Anrufs anfragt. In einer weiteren Variante der Erfindung jedoch vermerkt der Diensterechner, wenn die Teilnehmeranschlussleitung durch eine Online-Verbindung blockiert ist, beispielsweise nach Empfang der aktuellen Zugangsdaten des Endgeräts, und weist die Vermittlungsstelle dazu an, während der aktuellen Online-Verbindung ankommende Anrufe dem Diensterechner zu melden. Dann wird der Diensterechner nur dann durch Anfragen der Vermittlungsstelle belastet, wenn die Teilnehmeranschlussleitung durch eine Online-Sitzung blockiert ist und nicht wenn die Teilnehmeranschlussleitung durch eine sonstige Rufverbindung belegt ist.

Weiter kann die Vermittlungsstelle dem Diensterechner melden, wenn das Endgerät eine Online-Sitzung beendet hat, so dass der Diensterechner die nunmehr nicht mehr aktuellen und nicht mehr verwendeten Zugangsdaten zur Schonung von Speicherplatz wieder löschen kann.

Im folgenden werden die Erfindung und ihre Vorteile anhand von Ausführungsbeispielen unter Zuhilfenahme der Zeichnungen dargestellt.
- Figur 1: zeigt eine Anordnung zur Ausführung des erfindungsgemäßen Verfahrens mit je einem Ausführungsbeispiel eines erfindungsgemäßen Endgeräts TERA, einer Vermittlungsstelle SW1 sowie eines erfindungsgemäßen Diensterechners SCP.
- Figur 2: zeigt ein Ablaufdiagramm des erfindungsgemäßen Verfahrens.
- Figur 3: zeigt im Wesentlichen die Anordnung aus Figur 1, wobei die aus Figur 1 bekannten Komponenten teilweise anders miteinander verbunden sind.
- Figur 4: zeigt ebenfalls im Wesentlichen die Anordnung aus Figur 1, jedoch anstatt dem Diensterechner SCP ein Ausführungsbeispiel eines erfindungsgemäßen Diensterechners GPTM.

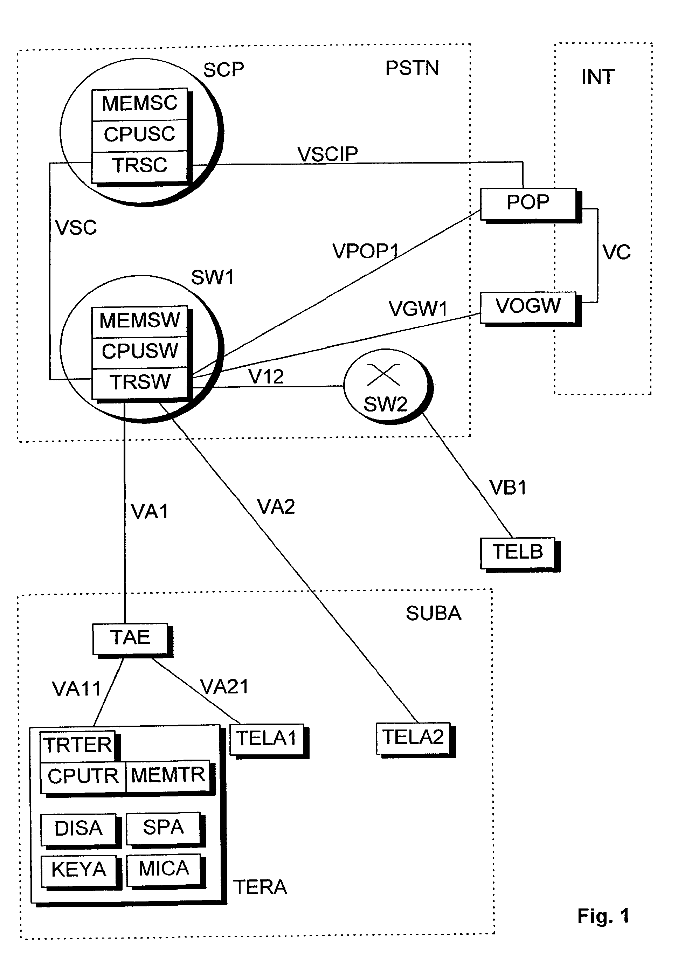

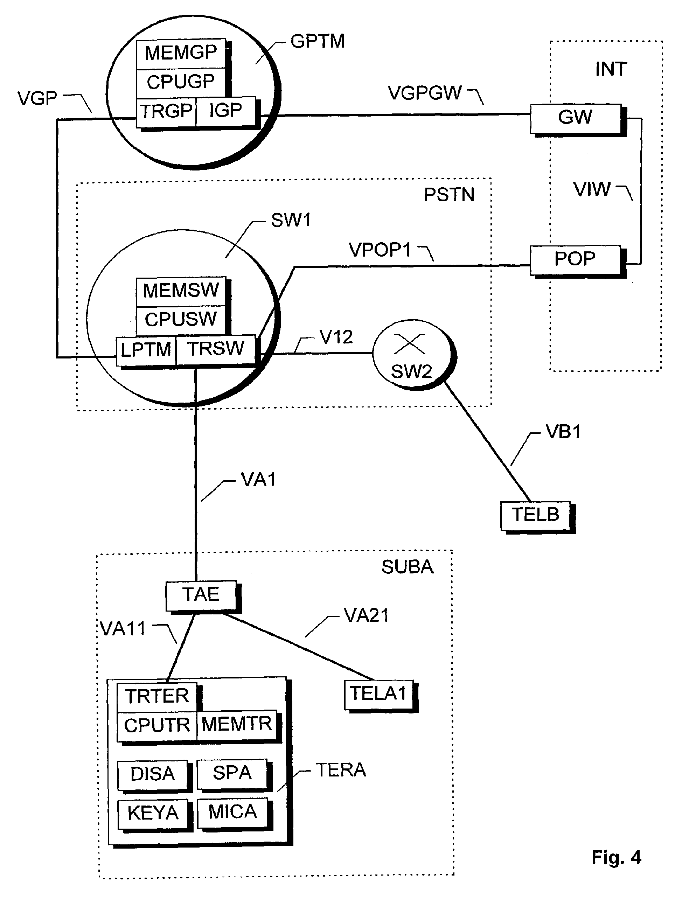

Die Figuren 1, 2 und 3 zeigen Ausführungsbeispiele, die auf einem sogenannten Intelligenten Netz aufbauen, die Figur 4 ein Ausführungsbeispiel, das z.B. auf dem Internet oder einem Intranet basieren kann.

In Figur 1 ist eine beispielhafte Anordnung dargestellt, mit der die Erfindung ausgeführt werden kann. Figur 1 zeigt ein Telekommunikationsnetz PSTN, ein Online-Datennetz INT sowie Endgeräte eines Teilnehmers SUBA, jeweils angedeutet durch einen punktierten Kasten. Der Teilnehmer SUBA verfügt über ein erfindungsgemäßes Endgerät TERA sowie über zwei weitere Endgeräte TELA1 und TELA2, bei denen es sich beispielsweise um Festnetz-Telefone oder Mobilfunk-Telefone handeln kann. Das erfindungsgemäße Endgerät TERA ist über eine Teilnehmeranschlussleitung VA11 mit einer Teilnehmeranschlussbuchse TAE verbunden. Das Endgerät TELA1 ist über eine alternative Anschlussleitung VA21 mit der Teilnehmeranschlussbuchse TAE verbunden. Bei dem Endgerät TERA handelt es sich beispielsweise um einen Personalcomputer. Es kann sich bei dem Endgerät TERA jedoch auch um ein Mobilfunk-Endgerät oder um ein Festnetz-Telefon handeln, mit denen jeweils Zugang zum Internet möglich ist. Das Endgerät TERA weist ein Verbindungsmittel TRTER auf, bei dem es sich beispielsweise um ein Modem oder um einen ISDN-Adapter handelt. Mit dem Verbindungsmittel TRTER kann das Endgerät TERA über das Telekommunikationsnetz PSTN eine Verbindung zu dem Online-Datennetzwerk INT aufbauen. Weiterhin weist das Endgerät TERA ein Steuermittel CPUTR sowie ein Speichermittel MEMTR auf. Das Steuermittel CPUTR ist beispielsweise ein Prozessor mit dem Programm-Code ausgeführt werden kann, der in dem Speichermittel MEMTR gespeichert ist. Bei dem Speichermittel MEMTR handelt es sich z.B. um eine Festplatte oder um RAM-Bausteine. Weiterhin weist das Endgerät TERA ein Anzeigemittel DISA sowie ein Eingabemittel KEYA auf. Das Anzeigemittel DISA ist beispielsweise ein Computer-Monitor oder ein LCD-Display (Liquid Cristal Display). Das Eingabemittel KEYA kann eine Tastatur oder eine Maus sein. Weiterhin weist das Endgerät TERA einen Lautsprecher SPA sowie ein Mikrofon MICA auf, mit denen Sprachaus-bzw. Spracheingabe möglich sind.

Von dem Telekommunikationsnetz PSTN, das beispielsweise ein ISDN-Telekommunikationsnetz (ISDN = Integrated Services Digital Network) oder ein Mobilfunk-Telekommunikationsnetz sein kann, sind stellvertretend für weitere, in Figur 1 nicht gezeigte Einrichtungen, eine erfindungsgemäße Vermittlungsstelle SW1, eine Vermittlungsstelle SW2 sowie ein Diensterechner SCP gezeigt. Die Vermittlungsstellen SW1 und SW2 sind über eine Verbindungsleitung V12 miteinander verbunden. Bei der Verbindungsleitung V12 kann es sich um ein Kanalbündel zwischen den beiden Vermittlungsstellen handeln. Es ist aber auch möglich, dass die Verbindung V12 über weitere, in Figur 1 nicht dargestellte Vermittlungsstellen führt. Die Vermittlungsstelle SW1 und der Diensterechner SCP sind über eine Verbindung VSC miteinander verbunden. Bei der Verbindung VSC handelt es sich um eine Verbindung, die vorzugsweise über einen Signalisierungskanal oder über ein Signalisierungsnetzwerk geführt wird. Ein solches Signalisierungsnetzwerk ist z.B. das zentrale Zeichengabesystem Nr. 7. Die Verbindung VSC kann jedoch auch über ein sogenanntes VPN (Virtual Private Network) führen, das ein auf dem Telekommunikationsnetz PSTN oder dem Internet INT aufgebautes privates logisches Netzwerk sein kann. Von der Vermittlungsstelle SW1 sind beispielhaft einige wesentliche Komponenten gezeigt, nämlich ein Verbindungsmittel TRSW sowie ein Steuermittel SPUSW und ein Speichermittel MEMSW. Mit dem Verbindungsmittel TRSW kann die Vermittlungsstelle SW1 einerseits Daten- und Sprachverbindungen zu Teilnehmern oder anderen Vermittlungsstellen aufbauen. Andererseits kann das Verbindungsmittel TRSW auch Signalisierungsverbindungen, wie z.B. die Verbindung VSC zu dem Diensterechner SCP aufbauen. Bei dem Steuermittel CPUSW handelt es sich um einen Prozessor oder um eine Gruppe von Prozessoren, die Befehle ausführen können, die in dem Speichermittel MEMSW gespeichert sind. Das Steuermittel CPUSW steuert die Funktionen der Vermittlungsstelle SW1 und nimmt dabei beispielsweise auf die Funktionen des Verbindungsmittels TRSW Einfluss. Das Verbindungsmittel TRSW, das Steuermittel CPUSW und das Speichermittel MEMSW sind durch in Figur 1 nicht dargestellte Verbindungen untereinander verbunden. Weiterhin kann die Vermittlungsstelle SW1 weitere Baugruppen aufweisen, z.B. ein Koppelnetzwerk oder eine Schnittstelle zu einem Network Management System. Die Vermittlungsstelle SW2 kann intern ebenfalls so ausgestattet sein wie die Vermittlungsstelle SW1. Die Vermittlungsstelle SW2 kann jedoch auch eine konventionelle, bekannte Vermittlungsstelle sein.

Der Diensterechner SCP weist ein Verbindungsmittel TRSC, sowie ein Steuermittel CPUSC und Speichermittel MEMSC auf. Bei dem Diensterechner SCP kann es sich um einen Server handeln, der durch ein UNIX-Betriebssystem oder ein Windows-NT-Betriebssystem betrieben wird. Das Steuermittel CPUSC ist ein Prozessor oder ein Cluster von Prozessoren, das die Befehle des Betriebssystems, das in dem Speicher MEMSC gespeichert ist, ausführt. Weiterhin können in dem Speichermittel MEMSC, das beispielsweise eine Festplatte oder RAM-Bausteine umfasst, Programmcode-Sequenzen gespeichert sein, die von dem Steuermittel CPUSC ausgeführt werden. Das Steuermittel CPUSC beeinflusst auch die Funktionen des Verbindungsmittels TRSC, mit dem z.B. die erwähnte Verbindung VSC aufgebaut werden kann. Der Diensterechner SCP weist auch weitere, in Figur 1 nicht dargestellte Baugruppen auf, z.B. einen Monitor, eine Tastatur und eine Maus. Der Diensterechner SCP kann auch weitere Vermittlungsstellen außer der Vermittlungsstelle SW1 bedienen.

Der Diensterechner SCP ist vorzugsweise - aber nicht unbedingt - ein Diensterechner eines Intelligenten Netzes, ein sogenannter Service Control Point (SCP). Die Vermittlungsstelle SW1 ist dann eine Dienst-Vermittlungsstelle, die auch als Service Switching Point bezeichnet wird. Das als Intelligentes Netz agierende Telekommunikationsnetz PSTN kann in diesem Fall auch weitere Komponenten umfassen, beispielsweise einen sogenannten Service Management Point (SMP), mit dem die Dienste des Intelligenten Netzes gesteuert werden, sowie ein sogenanntes Service Creation Environment (SCE), mit dem Dienste für ein Intelligentes Netz erzeugt werden können. Der Diensterechner SCP erbringt für die Vermittlungsstelle SW1, sowie auch für weitere, nicht dargestellte aber ähnlich ausgestattete Vermittlungsstellen Dienste. Ein solcher Dienst ist beispielsweise der bekannte Freecall-Dienst (Rufnummern beginnend mit "0800"). Die Vermittlungsstelle SW1 und der Diensterechner SCP können zwar den Anforderungen eines Intelligenten Netzes entsprechen, sie können jedoch auch erfindungsgemäß auf eine freie, proprietär definierte Weise zusammenwirken. Die Verbindung VSC führt dann beispielsweise über ein Local Area Network (LAN). Ein solches proprietäres Zusammenwirken kann auch definiert werden, wenn die Vermittlungsstelle SW1 und der Diensterechner SCP zu einer einzigen Einrichtung, einem sogenannten Service Switching and Control Point (SSCP), zusammengefasst werden. Das Speichermittel MEMSW erfüllt dann zusätzlich die Funktionen des Speichermittels MEMSC, das Steuermittel CPUSW erfüllt die Funktionen des Steuermittels CPUSC und das Verbindungsmittel TRSW die
Funktionen des Verbindungsmittels TRSC.

Von dem Online-Datennetzwerk INT sind lediglich die Zugangseinrichtung POP sowie ein Gateway VOGW dargestellt. Bei dem Online-Datennetzwerk INT handelt es sich vorzugsweise um das Internet. Die weitere Infrastruktur des
Datennetzwerkes INT, beispielsweise Server, Router, Gateways und dergleichen sind in Figur 1 aus Gründen der Einfachheit nicht dargestellt.

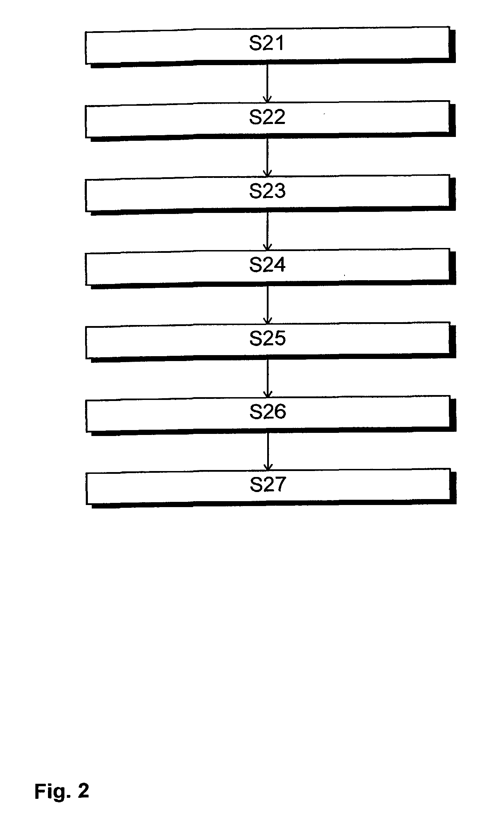

Im Folgenden wird nun anhand der Anordnung aus Figur 1 unter Zuhilfenahme des Ablaufdiagrammes aus Figur 2 ein typischer Verfahrensablauf dargestellt.

In einem Schritt S21 baut der Teilnehmer SUBA mit seinem Endgerät TERA eine Verbindung zu der Zugangsrichtung POP des Online-Datennetzwerkes INT auf.
Dazu gibt der Teilnehmer SUBA an dem Eingabemittel KEYA die Teilnehmernummer der Zugangseinrichtung POP ein. Über die Anschlussleitung VA11 und die Teilnehmeranschlussleitung VA1 baut das Endgerät TERA daraufhin eine Verbindung zu der Vermittlungsstelle SW1 auf. Mit Hilfe der Teilnehmernummer der Zugangseinrichtung POP vervollständigt die Vermittlungsstelle SW1 dann die gewünschte Verbindung des Teilnehmers SUBA und stellt dazu die weitere Verbindung VPOP1 zu der Zugangseinrichtung POP auf. Die Zugangseinrichtung POP sendet daraufhin in einem Schritt S22 dem Endgerät TERA aktuelle Zugangsdaten. Die Zugangsdaten umfassen insbesondere eine Adresse, über die das Teilnehmer-Endgerät TERA von dem Online-Datennetzwerk INT aus erreicht werden kann. Wenn das Online-Datennetzwerk INT das Internet ist, wird als ein solches Verfahren beispielsweise das Dynamic Host Configuration Protocol (DHCP) angewandt. Bei dem DHCP-Verfahren wird eine Internet-Adresse dynamisch zugewiesen, die lediglich für die aktuelle Online-Sitzung gültig ist. Wenn die Internet-Adresse nicht exklusiv dem Endgerät TERA zugewiesen ist, sondern auch für weitere Endgeräte verwendet werden kann, so sendet die Zugangseinrichtung POP auch eine weitere Kennung, eine sogenannte "Portnumber", mit der das Endgerät TERA von dem Online-Datennetzwerk INT aus eindeutig adressiert werden kann. Mit Hilfe der nunmehr vorhandenen Zugangsdaten können über das Endgerät TERA die Einrichtungen des Online-Datennetzwerkes INT erreicht werden. Dazu wird von dem Steuermittel CPUTR ein sogenannter Browser, z.B. ein WAP-Browser (WAP = Wireless Application Protocol) oder ein Netscape Navigator ausgeführt, mit dem aus dem Internet empfangene Daten ausgewertet und angezeigt werden können.

Durch die Online-Verbindung zu dem Online-Datennetzwerk INT ist jedoch die Teilnehmeranschlussleitung VA1 des Teilnehmers SUBA blockiert. Damit ein Anrufer, der den Teilnehmer SUBA über die Teilnehmeranschlussleitung VA1 erreichen möchte, nicht nur ein Besetztzeichen hört, sendet das Endgerät TERA in einem Schritt S23 die aktuellen Zugangsdaten an den Diensterechner SCP. Dazu führt das Steuermittel CPUTR ein Programm aus, das in dem Speicher MEMTR gespeichert ist. Dieses Programm, das beispielsweise ein sogenanntes Java-Applet sein kann, versendet dann eine Nachricht mit dem Zugangsdaten sowie mit der Teilnehmernummer der Teilnehmeranschlussleitung VA1 adressiert an den Diensterechner SCP. Diese Nachricht wird zunächst über die Teilnehmeranschlussleitung VA1 an die Vermittlungsstelle SW1 und dann über die Verbindung VPOP1 an die Zugangseinrichtung POP gesendet. Anhand der in der Nachricht beispielsweise als die üblicherweise erforderliche Rücksendeadresse enthaltenen Adresse des Diensterechners SCP kann dann die Nachricht entweder direkt von der Zugangseinrichtung POP auf der Verbindung VSCIP an den Diensterechner SCP gesendet werden, oder indirekt über das Online-Datennetzwerk INT über eine in Figur 1 nicht dargestellte Verbindung. Neben den Zugangsdaten für das Online-Datennetzwerk INT kann die Nachricht auch ein Passwort enthalten, das gegen einen missbräuchlichen Gebrauch des erfindungsgemäßen Dienstes schützt. Der Diensterechner SCP speichert nun die Zugangsdaten und die Teilnehmernummer aus der Nachricht in seinem Speichermittel MEMSC und ist damit in Kenntnis gesetzt, unter welchen aktuellen Zugangsdaten das Endgerät TERA über das Online-Datennetzwerk INT erreichbar ist. Falls die Zugangseinrichtung POP eventuell eine Adressübersetzung der Adresse des Endgerätes TERA durchführt, wird die übersetzte Adresse durch die Zugangseinrichtung POP in die Nachricht eingetragen, so dass der Diensterechner SCP diejenigen Zugangsdaten erfährt, unter denen das Endgerät TERA adressierbar ist.

Wenn die Teilnehmeranschlussleitung VA1 eine ISDN-Teilnehmeranschlussleitung oder eine Funkstrecke zu einem Mobilfunknetzwerk ist, kann das Endgerät TERA in einer Variante der Erfindung die Zugangsdaten auch über einen Signalisierungskanal, einen sogenannten D-Kanal bzw. einen Dienstkanal, an die Vermittlungsstelle SW1 senden. Die Vermittlungsstelle SW1 leitet diese Zugangsdaten dann in Form einer Dienstnachricht auf der Verbindung VSC an den Diensterechner SCP weiter.

Wenn nun ein weiterer Teilnehmer den Teilnehmer SUBA erreichen will, beispielsweise indem er über das Endgerät TELB einen Anruf an den Teilnehmer SUBA tätigt, so gibt der Teilnehmer an dem Endgerät TELB zunächst die Teilnehmernummer des Teilnehmeranschlusses VA1 ein, so dass das Endgerät TELB eine Verbindung VB1 zu der Vermittlungsstelle SW2 aufbauen kann. Diese stellt dann die Verbindung V12 zu der Vermittlungsstelle SW1 her. Die Vermittlungsstelle SW1 jedoch kann den Ruf nicht bis zu der Teilnehmeranschlusseinrichtung TAE durchstellen, da das Endgerät TERA die Teilnehmeranschlussleitung VA1 mit seiner Online-Sitzung blockiert. Deshalb meldet die Vermittlungsstelle SW1 in einem Schritt S24 an den Diensterechner SCP das Bereitstehen eines Anrufes für die Teilnehmeranschlussleitung VA1.

Der Diensterechner SCP erbringt daraufhin in einem Schritt S25 einen vorherbestimmten Dienst zur Bearbeitung des angekommenen Anrufes. Dabei sendet der Diensterechner SCP beispielsweise mit Hilfe der in dem Speicher MEMSC abgelegten Zugangsdaten des Endgerätes TERA eine Nachricht über die Verbindung VSCIP, die Zugangseinrichtung POP, die Verbindung VPOP1 und die Verbindung VA1 an das Endgerät TERA, in der auf das Ankommen eines Anrufes hingewiesen wird. Diese Nachricht wird dann von dem Endgerät TERA an dem Anzeigemittel DISA angezeigt. Bei der Nachricht kann es sich aber auch beispielsweise um Java-Code handeln, der von dem auf dem Endgerät TERA laufenden Browser ausgeführt werden kann. Der Teilnehmer SUBA kann dann beispielsweise seine Online-Verbindung zu dem Online-Datennetzwerk INT abbrechen, so dass die Vermittlungsstelle SW1 den angekommenen Ruf auf die Teilnehmeranschlussleitung VA1 durchstellen kann. Der Teilnehmer SUBA kann den Anruf beispielsweise über das Endgerät TELA1 und die Anschlussleitung VA21 entgegennehmen.

Es ist jedoch auch möglich, dass der Diensterechner SCP über die Verbindung VSC eine Anweisung an die Vermittlungsstelle SW1 sendet, in der er die Vermittlungsstelle SW1 dazu anweist, den angekommenen Ruf über die Teilnehmeranschlussleitung VA2 an das Endgerät TELA2 des Teilnehmers SUBA durchzustellen. Die Vermittlungsstelle SW1 leitet dann den Anruf an das Endgerät TELA2 weiter. Der Teilnehmer SUBA kann somit weiter "Online" bleiben und trotzdem einen Anruf über sein zweites Endgerät TELA2 entgegennehmen. Es kann beispielsweise so sein, dass die Teilnehmeranschlussleitung VA1 über ein leitungsgebundenes Netz führt, während die Teilnehmeranschlussleitung VA2 über ein Mobilfunknetz führt.

Insbesondere wenn der Teilnehmer SUBA nicht über ein zweites Endgerät TELA2 verfügt, ist es sehr vorteilhaft, wenn der Diensterechner SCP die Vermittlungsstelle SW1 dazu anweist, den angekommenen Ruf über das Online-Datennetzwerk INT dem Endgerät TERA zuzuleiten. Die Vermittlungsstelle SW1 stellt dann zunächst eine Verbindung VGW1 zu dem Gateway VOGW her. Das Gateway VOGW kann aus dem Telekommunikationsnetz PSTN kommende Sprachnachrichten oder Sprachsignale in auf dem Online-Datennetzwerk INT übliche digitale Datennachrichten umwandeln. Umgekehrt wandelt das Gateway VOGW aus dem Online-Datennetzwerk stammende Datennachrichten in Sprachsignale oder Sprachnachrichten um. Das Gateway VOGW stellt eine Verbindung VC über das Online-Datennetzwerk INT zu der Zugangseinrichtung POP her. Die Verbindung VC kann über verschiedene, in Figur 1 nicht dargestellte Einrichtungen beispielsweise Server und Router des Online-Datennetzwerkes INT führen. Die Zugangseinrichtung POP sendet dann von dem Gateway VOGW empfangene Sprach-Datennachrichten über die Verbindungen VPOP1 und VA1 an das Endgerät TERA. Das Endgerät TERA gibt diese Nachrichten dann über seinen Lautsprecher SPA aus. In umgekehrter Richtung empfängt das Endgerät TERA Sprache über das Mikrofon MICA, wandelt diese Sprache in Daten, und sendet diese Daten an die Zugangseinrichtung POP. Die Zugangseinrichtung POP gibt die Sprach-Nachrichten an das Gateway VOGW weiter, welche daraus Sprache oder Sprachnachrichten erzeugt. Diese Sprachnachrichten gelangen dann über die Verbindung VGW1, über die Vermittlungsstelle SW1, über die Verbindung V12 und über die Vermittlungsstelle SW2 zu dem Endgerät TELB. Auf diese Weise kann der Teilnehmer SUBA einerseits mit dem Online-Datennetzwerk INT Daten austauschen, ist aber andererseits für Sprachkommunikation jederzeit erreichbar.

Der Diensterechner SCP kann als Reaktion auf einen in der Vermittlungsstelle SW1 bereitstehenden Anruf die Vermittlungsstelle SW1 auch dazu anweisen, die die Teilnehmeranschlussleitung VA1 blockierende Online-Datennetzwerk-Sitzung abzubrechen oder zu unterbrechen und den ankommenden Anruf auf der Teilnehmeranschlussleitung VA1 zu signalisieren. Im Falle einer Unterbrechung legt die Vermittlungsstelle SW1 die Verbindung VPOP1 zunächst in eine Wartestellung. Im Falle eines Abbruchs kann dieser Schritt entfallen. Die Vermittlungsstelle SW1 sendet dann ein Rufsignal auf der Teilnehmeranschlussleitung VA1. Der Teilnehmer SUBA1 kann dann den ankommenden Ruf über sein Endgerät TELA1 oder auch über das Endgerät TERA entgegennehmen. Wenn die Online-Sitzung durch den nunmehr entgegengenommenen neuen Anruf nur unterbrochen werden sein sollte, stellt die Vermittlungsstelle SW1 nach Beendigung der zwischenzeitlichen Rufverbindung wieder die ursprünglich bestehende Online-Verbindung VA11, VA1, VPOP1 her.

Der Diensterechner SCP kann auch bei einem in der Vermittlungsstelle SW1 bereitstehenden Anruf das Endgerät TERA dazu anweisen, die die Teilnehmeranschlussleitung VA1 blockierende Online-Datennetzwerk-Sitzung abzubrechen oder zu unterbrechen. Wenn das Endgerät TERA diese Anweisung ausgeführt hat, signalisiert die Vermittlungsstelle SW1 den ankommenden Anruf auf der Teilnehmeranschlussleitung VA1 und stellt den Anruf bei Rufannahme seitens des Endgerätes TERA oder des Endgerätes TELA1 auf die Teilnehmeranschlussleitung VA1 durch. Wenn eine Unterbrechung der Online-Datennetzwerk-Sitzung konfiguriert ist, kann das Endgerät TERA nach Beendigung des zwischenzeitlich durchgestellten Anrufs die Online-Datennetzwerk-Sitzung durch erneuten Aufbau der Online-Verbindung VA11, VA1, VPOP1 wiederaufnehmen.

Welcher der bereits beschriebenen Dienste durch den Diensterechner SCP erbracht wird, kann durch eine entsprechende Vor-Konfiguration in dem Speicher MEMSC festgelegt sein. Eine solche Konfiguration kann z.B. durch ein Network Management System aus der Ferne konfiguriert oder von dem Endgerät TERA aus über eine HTML-Schnittstelle (HTML = HyperText Markup Language) des Diensterechners SCP eingestellt werden, die über das Online-Datennetzwerk INT von dem Endgerät TERA aus erreicht werden kann und deren HTML-Daten durch einen Browser in dem Endgerät TERA angezeigt werden können.

In einer besonders komfortablen Variante der Erfindung jedoch, sendet der Diensterechner SCP dem Endgerät bei Bereitstehen eines Anrufes für die blockierte Teilnehmeranschlussleitung VA1 zunächst ein Auswahlmenü, durch das eine Auswahl an möglichen Folgediensten zur Bearbeitung des ankommenden Anrufes angeboten wird. Der Diensterechner SCP kann dieses Auswahlmenü beispielsweise in Form einer Nachricht über die Verbindung VSCIP an die Zugangseinrichtung POP und dann weiter über die Verbindung VPOP1, die Vermittlungsstelle SW1, die Teilnehmeranschlussleitung VA1 und die Anschlussleitung VA11 an das Endgerät TERA senden. Das Endgerät TERA zeigt dann die in der Nachricht enthaltenen Auswahlmöglichkeiten mit Hilfe eines Programmes an, das in dem Speichermittel MEMTR gespeichert ist und von dem Steuermittel CPUTR ausgeführt wird. Anstatt einer einfachen Nachricht mit Auswahlmöglichkeiten kann der Diensterechner SCP auch ein durch das Steuermittel CPUTR auswertbares Programm an das Endgerät TERA senden. Das Programm kann beispielsweise in der HTML-Seitenbeschreibungssprache und/oder der Programmiersprache Java geschrieben sein. Das Endgerät TERA zeigt die Auswahlmöglichkeiten mit Hilfe eines Browsers bzw. eines Java-Interpreters in Form eines Auswahlmenüs an der Anzeigevorrichtung DISA an. Wenn der Teilnehmer SUBA dann eine Auswahl trifft, indem er über das Eingabemittel KEYA einen Eingabebefehl gibt, nimmt das Endgerät TERA diese Eingabe in einem Schritt S26 entgegen. In einem Schritt S27 sendet dann das Endgerät TERA die getroffene Auswahl auf dem Verbindungsweg VA11, VA1, VPOP1, VSCIP an den Diensterechner SCP. Dieser kann anschließend den durch den Teilnehmer SUBA gewünschten Dienst erbringen. Wenn der Teilnehmer TELA beispielsweise gewünscht hat, dass der bereitstehende Anruf an einen Anrufbeantworter des Telekommunikationsnetzes PSTN weitergeleitet werden soll, sendet der Diensterechner SCP über die Verbindung VSC eine Anweisung an die Vermittlungsstelle SW1, den bereitstehenden Anruf an ein in Figur 1 nicht dargestelltes Anrufbeantwortermodul weiterzuleiten.

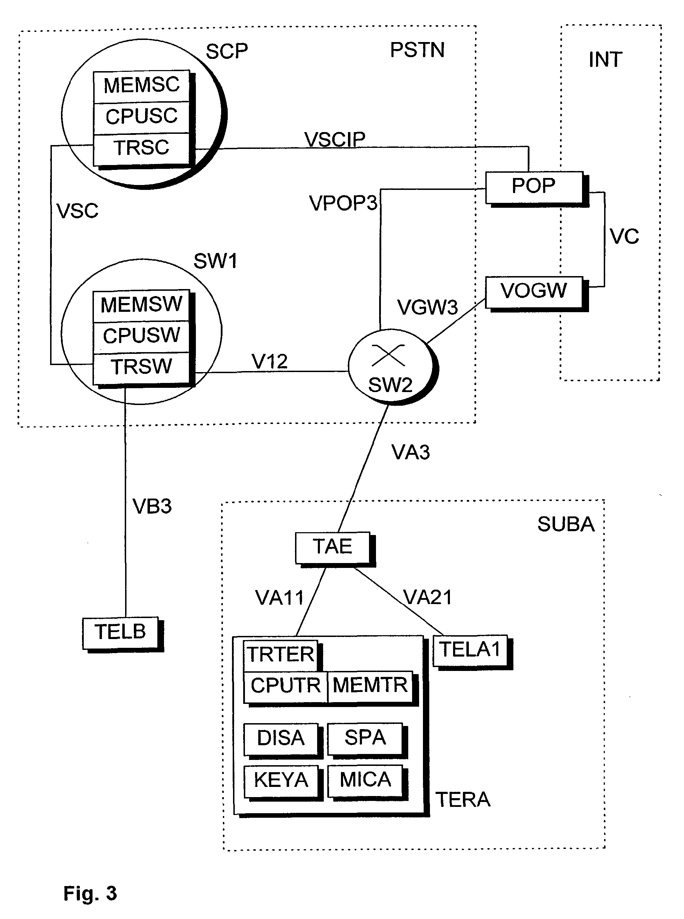

In Figur 3 ist im Wesentlichen die aus Figur 1 bekannte Anordnung dargestellt. Im Unterschied zu Figur 1 ist jedoch in Figur 3 das Endgerät TERA des Teilnehmers SUBA über eine Teilnehmeranschlussleitung VA3 an die Vermittlungsstelle SW2 angeschlossen. Aus Gründen der Vereinfachung entfällt auch das Endgerät TELA2 der zugehörigen Teilnehmeranschlussleitung VA2 des Teilnehmers SUBA. Weiterhin ist das Endgerät TELB nunmehr über eine Teilnehmeranschlussleitung VB3 nicht mehr an die Vermittlungsstelle SW2, sondern an die Vermittlungsstelle SW1 angeschlossen. Anstatt der Verbindung VPOP1 zwischen Vermittlungsstelle SW1 und Zugangseinrichtung POP zeigt Figur 3 eine Verbindung VPOP3 zwischen der Vermittlungsstelle SW2 und der Zugangseinrichtung POP. Ferner ist das Gateway VOGW nicht mehr mit der Vermittlungsstelle SW1, sondern mit der Vermittlungsstelle SW2 über eine Verbindung VGW3 verbunden. Anhand von Figur 3 soll nun veranschaulicht werden, dass ein Anruf nicht bis hin zu der Ortsvermittlungsstelle durchgestellt werden muss, die den Teilnehmeranschluss des Teilnehmers SUBA bedient, während dieser seine Teilnehmeranschlussleitung durch eine Online-Sitzung blockiert.

In bereits dargestellter Weise stellt der Teilnehmer SUBA eine Verbindung über seine Teilnehmeranschlussleitung VA3 und die Verbindung VPOP3 zu der Zugangseinrichtung POP des Online-Datennetzwerkes INT her. Dadurch ist die Teilnehmeranschlussleitung VA3 für weitere Anrufe blockiert. Wenn nun an dem Endgerät TELB die Rufnummer des Teilnehmeranschlusses VA3 eingegeben wird, so wird zunächst eine Verbindung VB3 zu der Vermittlungsstelle SW1 hergestellt. In einer ersten Variante baut die Vermittlungsstelle SW1 dann die weitere Verbindung V12 zu der Vermittlungsstelle SW2 auf. Die Vermittlungsstelle SW2 signalisiert daraufhin der Vermittlungsstelle SW1, dass die Teilnehmeranschlussleitung VA3 belegt ist. Daraufhin kann die Vermittlungsstelle SW1 die Verbindung V12 abbauen und den Diensterechner SCP um weitere Instruktionen zur Behandlung des bereitstehenden Anrufes anfragen. In einer zweiten Variante kann die Vermittlungsstelle SW1 auch lediglich über ein in Figur 3 nicht dargestelltes Signalisierungsnetz bei der Vermittlungsstelle SW2 anfragen, ob überhaupt ein Durchstellen des gewünschten Anrufes zu dem Teilnehmer SUBA möglich ist. Durch eine Signalisierungs-Antwortnachricht teilt die Vermittlungsstelle SW2 dann der Vermittlungsstelle SW1 mit, dass die Teilnehmeranschlussleitung VA3 blockiert ist. In diesem Fall wird nicht einmal eine Rufverbindung zwischen Vermittlungsstelle SW1 und der Vermittlungsstelle SW2 hergestellt. In einer dritten Variante kann die Vermittlungsstelle SW1 unmittelbar den Diensterechner SCP fragen, ob ein Ruf zu dem Teilnehmer SUBA in besonderer Weise zu behandeln ist. In jedem der drei Fälle kann dann der Diensterechner SCP mit Hilfe der aktuellen Zugangsdaten des Endgerätes TERA einen der bereits oben beschriebenen Dienste erbringen. Ein solcher Dienst kann beispielsweise darin bestehen, dass der Diensterechner SCP eine Anweisung an die Vermittlungsstelle SW1 sendet, eine Sprachverbindung über die Verbindung V12,die Vermittlungsstelle SW2, die Verbindung VGW3, das Gateway VOGW, die Verbindung VC, die Zugangseinrichtung POP, die Verbindung VPOP3, die Teilnehmeranschlussleitung VA3 und die Anschlussleitung VA11 bis hin zu dem Endgerät TERA herzustellen. Anhand der letztgenannten Beispiele wird sehr deutlich, dass durch die Erfindung die Ressourcen des Telekommunikationsnetzes PSTN sehr wenig belastet werden, wenn ein Anruf wegen einer Online-Sitzung nicht bis zu einem Teilnehmeranschluss durchgestellt werden kann. In dem Beispiel aus Figur 3 ist die Vermittlungsstelle SW1 eine Ortsvermittlungsstelle. Die Vermittlungsstelle SW1 kann jedoch auch eine Transitvermittlungsstelle sein, die Anrufe aus einem weiteren, in Figur 3 nicht dargestellten Telekommunikationsnetzwerk für das Telekommunikationsnetzwerk PSTN vermittelt.

Wenn das Telekommunikationsnetz PSTN weitere, dem Diensterechner SCP ähnliche Diensterechner aufweist, ist es besonders vorteilhaft, wenn die Zugangsdaten des Teilnehmers SUBA sowie weiterer, in den Figuren nicht dargestellter Teilnehmer, in einer zentralen, in den Figuren ebenfalls nicht dargestellten Datenbasis gesammelt werden. Eine solche Datenbasis kann beispielsweise ein sogenannter Service Management Point sein, in dem die Zugangsdaten der jeweiligen Teilnehmer abgelegt werden. Der Service Management Point datet dann die Diensterechner, unter anderem auch den Diensterechner SCP mit akutellen Zugangsdaten auf.

In Figur 4 ist im Wesentlichen die aus Figur 1 bekannte Anordnung dargestellt. Anhand von Figur 4 wird im Folgenden eine Lösungsvariante ohne ein Intelligentes Netz beschrieben. Anstatt dem Diensterechner SCP ist in Figur 4 ein Diensterechner GPTM dargestellt, der über ein Verbindungsmittel IGP eine Verbindung VGPGW zu einem Gateway GW des Online-Datennetzwerkes INT aufbauen kann. Das Gateway GW ist ein Rechner, der dem Diensterechner GPTM einen Zugang zu dem Online-Datennetzwerk INT ermöglicht. Auf der Verbindung VGPGW wird vorzugsweise das sogenannte Transmission Control Protocol / Internet Protocol (TCP/IP) eingesetzt. In die Verbindung VGPGW kann auch ein sogenannter Firewall geschaltet sein, der den Zugang zu dem Diensterechner GPTM kontrolliert. Der Diensterechner GPTM könnte zwar, wie der Diensterechner SCP, auch ein Service Control Point eines Intelligenten Netzes sein, ist jedoch in dem vorliegenden Ausführungsbeispiel von Figur 4 ein unabhängiger Server, der aus logischer Sicht nicht direkter Bestandteil des Telekommunikationsnetzes PSTN ist. Daher umfasst der das Telekommunikationsnetz PSTN andeutende punktierte Kasten den Diensterechner GPTM nicht. Grundsätzlich kann auch der Diensterechner GPTM die bereits im Zusammenhang mit dem Diensterechner SCP beschriebenen Dienste leisten.

Bei dem Diensterechner GPTM kann es sich um einen Rechner handeln, der durch ein UNIX-Betriebssystem oder ein Windows-NT-Betriebssystem betrieben wird. Das Steuermittel CPUGP ist ein Prozessor oder ein Cluster von Prozessoren, das die Befehle des Betriebssystems, das in dem Speicher MEMGP gespeichert ist, ausführt. Weiterhin können in dem Speichermittel MEMGP, das beispielsweise eine Festplatte oder RAM-Bausteine umfasst, Programmcode-Sequenzen gespeichert sein, die von dem Steuermittel CPUGP ausgeführt werden. Das Steuermittel CPUGP beeinflusst auch die Funktionen eines Verbindungsmittels TRGP, mit dem eine Verbindung VGP zu einem Verbindungsmittel LPTM der Vermittlungsstelle SW1 aufgebaut werden kann. Der Diensterechner GPTM weist auch weitere, in Figur 1 nicht dargestellte Baugruppen auf, z.B. einen Monitor, eine Tastatur und eine Maus. Der Diensterechner GPTM kann auch weitere Vermittlungsstellen ausser der Vermittlungsstelle SW1 bedienen.

Die Verbindung VGP kann über einen Kanal eines Signalisierungsnetzwerkes, beispielsweise des zentralen Zeichengabesystems Nr. 7 führen, ist jedoch in dem Ausführungsbeispiel in Figur 4 eine Verbindung, die über das Internet, das Online-Datennetzwerk INT oder über ein separates Local Area Network (LAN) führt und auf der mit Hilfe des Transmission Control Protocols / Internet Protocols (TCP/IP) übertragen wird. Die Verbindung VGP kann auch über ein Virtual Private Network (VPN) führen. Die Verbindungsmittel LPTM und TRGP sind jeweils dafür ausgelegte Schnittstellenmodule.

Wie oben bereits im Zusammenhang mit den Schritten S26 und S27 dargestellt, bietet das Verbindungsmittel IGP dem Teilnehmer SUBA an dessen Endgerät TERA eine Konfigurationsschnittstelle an, über die der Teilnehmer SUBA mögliche Folgedienste zur Bearbeitung eines während einer Online-Sitzung ankommenden Anrufes auswählen kann. Der Teilnehmer kann über das Verbindungsmittel IGP einerseits dauerhaft Folgedienste auswählen oder parametrieren. Andererseits kann sich der Teilnehmer über das Verbindungsmittel IGP auch zu Beginn einer Online-Sitzung anmelden und einen der erfindungsgemäßen Dienste aktivieren.

Zum Aufbau einer Online-Sitzung wird dabei zunächst in bereits beschriebener Weise eine Verbindung von dem Endgerät TERA über die Anschlussleitung VA11, die Teilnehmeranschlussleitung VA1, die Vermittlungsstelle SW1 und die Verbindung VPOP1 zu der Zugangseinrichtung POP aufgebaut und damit die Teilnehmeranschlussleitung VA1 blockiert. Dann adressiert das Endgerät TERA das Verbindungsmittel IGP des Diensterechners GPTM, z.B. indem ein in dem Speichermittel MEMTR abgelegtes und durch das Steuermittel CPUTR ausgeführtes Programm-Modul die (Internet-)Adresse des Diensterechners GPTM an die Zugangseinrichtung POP sendet. Daraufhin wird eine Verbindung VIW zwischen der Zugangseinrichtung POP und dem Gateway GW aufgebaut, das dann die Verbindung VGPGW aufbaut. Beispielsweise durch Eingabe einer Bedienerkennung ("User-ID") und eines Passwortes an dem Endgerät TERA, weist sich der Teilnehmer SUBA als berechtigt für einen Zugang zu dem Diensterechner GPTM sowie zu für ihn in dem Speichermittel MEMGP gespeicherten Daten zur Erbringung von Telekommunikationsdiensten aus. Das Endgerät TERA sendet Bedienerkennung und Passwort an den Diensterechner GPTM. Ferner sendet das Endgerät TERA auch aktuelle, von der Zugangseinrichtung POP erhaltene Zugangsdaten an den Diensterechner GPTM. Anhand des Empfangs der Zugangsdaten oder auch anhand einer separaten, von dem Endgerät TERA gesendeten Information ermittelt der Diensterechner GPTM, dass das Endgerät TERA aktuell eine die Teilnehmeranschlussleitung VA1 blockierende Online-Sitzung unterhält und dass der Teilnehmer SUBA einen Dienst zur Behandlung ankommender Anrufe während der Online-Sitzung ordert. Der Diensterechner GPTM speichert die Zugangsdaten und die Aktivierung des Dienstes in dem Speichermittel MEMGP.

Der Diensterechner GPTM sendet dann eine Anweisung an die Vermittlungsstelle SW1, das Bereitstehen eines für die Teilnehmeranschlussleitung VA1 bestimmten ankommenden Anrufes an den Diensterechner GPTM zu melden, solange das Endgerät TERA die die Teilnehmeranschlussleitung VA1 blockierende Verbindung zu dem Online-Datennetzwerk INT unterhält. Die Vermittlungsstelle SW1 setzt auf die Anweisung hin ein entsprechendes Statusbit in dem Speichermittel MEMSW. Das Statusbit kann z.B. im Zusammenhang mit einem sogenannten "Call Waiting"-Dienst abgelegt werden, der von der Vermittlungsstelle SW1 als ein ISDN-Dienst erbracht wird und der durch die ITU (International Telecommunication Union) definiert ist. Die Vermittlungsstelle SW1 quittiert die Annahme der Anweisung mit einer Quittungs-Meldung an den Diensterechner GPTM. Die Meldung leitet der Diensterechner GPTM über die Verbindung VGPGW-VIW-VPOP1-VA1-VA11 an das Endgerät TERA, so dass der Teilnehmer SUBA die erfolgreiche Aktivierung des Dienstes zur Behandlung ankommender Anrufe während der Online-Sitzung z.B. durch das Anzeigemittel DISA angezeigt bekommt. Sofern bei einem der oben genannte Schritte ein Fehler auftritt, beispielsweise ein falsches Passwort angegeben wird, sendet der Diensterechner GPTM dem Endgerät TERA eine negative Quittung und bricht den Aktivierungsvorgang des Dienstes durch den Teilnehmer SUBA ab. Auch die Vermittlungsstelle SW1 dem Diensterechner GPTM im Fehlerfall negativ und bricht den Aktivierungsvorgang des Dienstes ab.

Wenn nach Aktivierung des Dienstes ein Anruf für das Endgerät TERA bei der Vermittlungsstelle SW1 ankommt, beispielsweise von dem Endgerät TELB ausgehend, prüft die Vermittlungsstelle SW1, ob das Statusbit gesetzt ist, und sendet im positiven Fall eine Nachricht an den Diensterechner GPTM, dass ein Anruf für die blockierte Teilnehmeranschlussleitung VA1 bereitsteht. Die Nachricht enthält die Teilnehmernummer der Teilnehmeranschlussleitung oder eine andere, der Teilnehmeranschlussleitung zugeordnete Kennziffer sowie, falls verfügbar, die Teilnehmernummer des Endgeräts TELB. Nach einer eventuellen zusätzlich durchgeführten Überprüfung in dem Speichermittel MEMGP, ob der Dienst für den Teilnehmer SUBA aktiviert ist, erbringt der Diensterechner GPTM daraufhin den ausgewählten Dienst und sendet dabei beispielsweise über das Online-Datennetzwerk INT eine Meldung an das Endgerät TERA, dass ein Anruf in der Vermittlungsstelle SW1 bereitsteht.

Wenn die Online-Sitzung des Endgerätes TERA beendet wird und dabei die Verbindung zwischen Endgerät TERA und Zugangseinrichtung POP abgebaut wird, sendet die Vermittlungsstelle SW1 eine Nachricht über die Beendigung der Online-Sitzung an den Diensterechner GPTM und setzt das Statusbit in dem Speichermittel MEMSW zurück. Auch der Diensterechner GPTM setzt seinen "Online-Status" für die Teilnehmeranschlussleitung VA1 zurück und gibt den Speicher für die Zugangsdaten frei. Dadurch wird sichergestellt, dass der Dienst für ankommende Anrufe nur dann von dem Diensterechner GPTM erbracht wird, wenn jeweils zu Beginn einer Online-Sitzung gültige Zugangsdaten an den Diensterechner GPTM gesendet sind, der Dienst korrekt durch das Endgerät TERA aktiviert worden ist und das Endgerät TERA auch tatsächlich "online" ist. Der Diensterechner GPTM arbeitet bei dem Verfahren des Ausführungsbeispiels aus Figur 4 also nie mit Zugangsdaten, die von einer früheren Online-Sitzung noch vorhanden sind und evtl. bei einer neuen Online-Sitzung schon durch von der Zugangseinrichtung POP dem Endgerät TERA neu vergebene Zugangsdaten ungültig geworden sind.

Es könnte sich auch das Endgerät TERA bei dem Diensterechner GPTM über die Verbindung über das Online-Datennetzwerk INT abmelden und den Dienst für ankommende Anrufe deaktivieren. Eine Deaktivierung durch die Vermittlungsstelle SW1 funktioniert jedoch zuverlässiger, da das Endgerät TERA die Online-Sitzung auch überraschend beenden kann, beispielsweise durch eine sogenannten Computer-Absturz, also bei Auftreten eines Programmfehlers in einem durch das Steuermittel CPUTR ausgeführten Programmes. Bei geringeren Anforderungen an Funktionssicherheit sind jedoch auch einfachere Vorgehensweisen möglich, bei denen beispielsweise die Rücksetzung des Statusbits in der Vermittlungsstelle SW1 bei Abbau der Online-Sitzung entfällt oder bei denen nicht die Vermittlungsstelle SW1, sondern das Endgerät TERA einen Abbau der Online-Sitzung an den Diensterechner GPTM meldet.

Es ist auch möglich, dass der Vermittlungsstelle SW1 eine nicht mit dem Diensterechner GPTM verbundene Vermittlungsstelle vorgeschaltet ist, an die das Endgerät TERA angeschlossen ist. Die Dienste des Diensterechners sowie der Vermittlungsstelle SW1 zur Behandlung ankommender Anrufe während der anschließenden Online-Sitzung können dann beispielsweise folgendermassen aktiviert werden:

In der vorgeschalteten Vermittlungsstelle wird eine Rufumleitung bei "Besetzt" ("Call Forwarding Busy") auf eine in der Vermittlungsstelle SW1 eingerichtete Sonderrufnummer aktiviert. Ein solcher Aktivierungsvorgang ist bei dem "Call Forwarding Busy"-Dienst, einem üblichen ISDN-Dienst, an sich bekannt und muss daher nicht erläutert werden. Wenn dann ein Anruf während der anschließenden Online-Sitzung für das Endgerät TERA in der vorgeschalteten Vermittlungsstelle ankommt, leitet diese den Anruf an die Sonderrufnummer der Vermittlungsstelle SW1 weiter. Die Vermittlungsstelle SW1 benachrichtigt dann in der beschriebenen Weise über die Verbindung VGP den Diensterechner GPTM über das Bereitstehen eines für die Teilnehmeranschlussleitung VA1 bestimmten ankommenden Anrufes. Der Diensterechner GPTM sendet daraufhin beispielsweise eine Meldung über den bereitstehenden Anruf über das Online-Datennetzwerk INT an das Endgerät TERA.

## Patentansprüche

1. Verfahren zur Behandlung ankommender Telefonanrufe für eine Teilnehmeranschlussleitung (VA1) eines Telekommunikationsnetzes (PSTN) während einer die Teilnehmeranschlussleitung (VA1) blockierenden Online-Datennetzwerk-Sitzung mit den Schritten:
- ein Endgerät (TERA) baut eine Verbindung (VA11, VA1, VPOP1) zu einer Zugangseinrichtung (POP) eines Online-Datennetzwerkes (INT) über die Teilnehmeranschlussleitung (VA1) auf,
- die Zugangseinrichtung (POP) sendet dem Endgerät (TERA) aktuelle Zugangsdaten,
**gekennzeichnet durch** die folgenden weiteren Schritte:
- das Endgerät (TERA) meldet einem Diensterechner (SCP, GPTM) des Telekommunikationsnetzes die aktuellen Zugangsdaten,
- eine Vermittlungsstelle (SW1) des Telekommunikationsnetzes meldet das Bereitstehen eines für die Teilnehmeranschlussleitung (VA1) bestimmten ankommenden Anrufes an den Diensterechner (SCP, GPTM) und
- der Diensterechner (SCP, GPTM) erbringt zumindest einen vorherbestimmten Dienst zur Bearbeitung des ankommenden Anrufes.

2. Verfahren nach Anspruch 1, dadurch gekennzeichnet, dass der Diensterechner (SCP, GPTM) als vorherbestimmten Dienst eine Meldung an das Endgerät (TERA) sendet, in der auf den ankommenden Anruf hingewiesen wird.

3. Verfahren nach Anspruch 1, dadurch gekennzeichnet, dass der Diensterechner (SCP, GPTM) als vorherbestimmten Dienst den ankommenden Anruf an ein alternatives Ziel (TELA2) umleitet.

4. Verfahren nach Anspruch 1, dadurch gekennzeichnet, dass der Diensterechner (SCP, GPTM) als vorherbestimmten Dienst den ankommenden Anruf über das Online-Datennetzwerk zu dem Endgerät (TERA) umleitet.

5. Verfahren nach Anspruch 1, dadurch gekennzeichnet, dass der Diensterechner (SCP, GPTM) als vorherbestimmten Dienst die Vermittlungsstelle (SW1) oder das Endgerät (TERA) dazu anweist, die die Teilnehmeranschlussleitung (VA1) blockierende Online-Datennetzwerk-Sitzung abzubrechen oder zu unterbrechen, und dass die Vermittlungsstelle (SW1) den ankommenden Anruf auf der Teilnehmeranschlussleitung (VA1) signalisiert.

6. Verfahren nach Anspruch 1, dadurch gekennzeichnet, dass der Diensterechner (SCP, GPTM) als vorherbestimmten Dienst dem Endgerät (TERA) ein Auswahlmenü zusendet, durch das eine Auswahl an möglichen Folgediensten zur Bearbeitung des ankommenden Anrufes angeboten wird, dass das Endgerät (TERA) eine durch einen Bediener in dem Auswahlmenü getroffene Auswahl ermittelt, dass das Endgerät (TERA) die Auswahl an den Diensterechner (SCP, GPTM) sendet, und dass der Diensterechner (SCP, GPTM) den in der Auswahl festgelegten Folgedienst erbringt.

7. Verfahren nach Anspruch 1, dadurch gekennzeichnet, dass der Diensterechner (SCP, GPTM) der Vermittlungsstelle (SW1) eine Anweisung sendet, das Bereitstehen eines für die Teilnehmeranschlussleitung (VA1) bestimmten ankommenden Anrufes an den Diensterechner (SCP, GPTM) zu melden, wenn das Endgerät (TERA) die die Teilnehmeranschlussleitung (VA1) blockierende Verbindung (VA11, VA1, VPOP) zu der Zugangseinrichtung (POP) des Online-Datennetzwerkes (INT) über die Teilnehmeranschlussleitung (VA1) aufgebaut hat.

8. Verfahren nach Anspruch 1, dadurch gekennzeichnet, dass die Vermittlungsstelle (SW1) dem Diensterechner (SCP, GPTM) einen Abbau der die Teilnehmeranschlussleitung (VA1) blockierenden Verbindung (VA11, VA1, VPOP) des Endgeräts (TERA) zu der Zugangseinrichtung (POP) des Online-Datennetzwerkes (INT) über die Teilnehmeranschlussleitung (VA1) meldet.

9. Verfahren nach Anspruch 1, dadurch gekennzeichnet, dass die Vermittlungsstelle (SW1) bei Ankommen eines an eine Sonderrufnummer gerichteten Anrufes, die in der Vermittlungsstelle (SW1) eingerichtet ist, das Bereitstehen eines für die Teilnehmeranschlussleitung (VA1) bestimmten ankommenden Anrufes an den Diensterechner (SCP, GPTM) meldet.

10. Diensterechner (SCP, GPTM) zur Behandlung ankommender Telefonanrufe für eine Teilnehmeranschlussleitung (VA1) eines Telekommunikationsnetzes (PSTN) während einer die Teilnehmeranschlussleitung (VA1) blockierenden Online-Datennetzwerk-Sitzung eines Endgerätes (TERA), **dadurch gekennzeichnet, dass** der Diensterechner (SCP, GPTM) Empfangsmittel (TRSC, CPUSC, CPUGP, IGP) aufweist, die derart ausgestaltet sind, dass der Diensterechner (SCP, GPTM) von dem Endgerät (TERA) gesendete Zugangsdaten empfangen kann, die das Endgerät (TERA) von einer Zugangseinrichtung (POP) eines Online-Datennetzwerkes (INT) beim Aufbau einer Verbindung (VA11, VA1, VPOP1) über die Teilnehmeranschlussleitung (VA1) zu dem Online-Datennetzwerk (INT) empfangen hat, dass der Diensterechner (SCP, GPTM) Speichermittel (MEMSC, MEMGP) aufweist, die derart ausgestaltet sind, dass der Diensterechner (SCP, GPTM) die Zugangsdaten speichern kann, dass die Empfangsmittel (TRSC, CPUSC, TRGP, CPUGP) weiterhin derart ausgestaltet sind, dass der Diensterechner (SCP, GPTM) eine Meldung einer Vermittlungsstelle (SW1) des Telekommunikationsnetzes empfangen kann, in der die Vermittlungsstelle (SW1) einen für die Teilnehmeranschlussleitung (VA1) bestimmten ankommenden Anruf an den Diensterechner (SCP, GPTM) meldet, und dass der Diensterechner (SCP, GPTM) Diensterbringungsmittel (TRSC, MEMSC, CPUSC, TRGP, MEMGP, CPUGP) aufweist, die derart ausgestaltet sind, dass der Diensterechner (SCP, GPTM) zumindest einen vorherbestimmten Dienst zur Bearbeitung des ankommenden Anrufes mit Hilfe der Zugangsdaten erbringen kann.

11. Vermittlungsstelle (SW1) zur Behandlung ankommender Telefonanrufe für eine Teilnehmeranschlussleitung (VA1) eines Telekommunikationsnetzes (PSTN) während einer die Teilnehmeranschlussleitung (VA1) blockierenden Online-Datennetzwerk-Sitzung eines Endgerätes (TERA), wobei die Vermittlungsstelle (SW1) Empfangsmittel (TRSW) aufweist, die derart ausgestaltet sind, dass die Vermittlungsstelle (SW1) einen für die Teilnehmeranschlussleitung (VA1) bestimmten ankommenden Anruf empfangen und halten kann, während die Teilnehmeranschlussleitung (VA1) durch eine Online-Datennetzwerk-Sitzung des Endgerätes (TERA) blockiert ist, wobei die Vermittlungsstelle (SW1) Erkennungsmittel (TRSW, CPUSW) aufweist, die derart ausgestaltet sind, dass die Vermittlungsstelle (SW1) erkennen kann, dass das Endgerät (TERA) eine die Teilnehmeranschlussleitung(VA1) blockierende Verbindung (VA11, VA1, VPOP) aufgebaut hat, **dadurch gekennzeichnet, dass** die Vermittlungsstelle (SW1) Sendemittel (TRSW, CPUSW) aufweist, die derart ausgestaltet sind, dass die Vermittlungsstelle eine Meldung an einen Diensterechner (SCP, GPTM) senden kann, wenn ein für die Teilnehmeranschlussleitung (VA1) bestimmter ankommender Anruf bereitsteht, während die Teilnehmeranschlussleitung (VA1) durch eine Online-Datennetzwerk-Sitzung des Endgerätes (TERA) blockiert ist.

12. Endgerät (TERA) zur Behandlung ankommender Telefonanrufe für eine Teilnehmeranschlussleitung (VA1) eines Telekommunikationsnetzes (PSTN) während einer die Teilnehmeranschlussleitung (VA1) blockierenden Online-Datennetzwerk-Sitzung des Endgerätes (TERA), **dadurch gekennzeichnet, dass** das Endgerät (TERA) Empfangsmittel (TRTER) aufweist, die derart ausgestaltet sind, dass das Endgerät (TERA) von einer Zugangseinrichtung (POP) eines Online-Datennetzwerkes (INT) aktuelle Zugangsdaten empfangen kann, welche die Zugangseinrichtung (POP) beim Aufbau einer Verbindung (VA11, VA1, VPOP) über die Teilnehmeranschlussleitung (VA1) zu dem Online-Datennetzwerk (INT) dem Endgerät (TERA) sendet, und dass das Endgerät (TERA) Sendemittel (TRTER) aufweist, die derart ausgestaltet sind, dass das Endgerät (TERA) die aktuellen Zugangsdaten an einen Diensterechner (SCP, GPTM) des Telekommunikationsnetzes senden kann, der mit Hilfe der Zugangsdaten zumindest einen vorherbestimmten Dienst zur Bearbeitung eines ankommenden Anrufes erbringen kann.

13. Endgerät (TERA) zur Behandlung ankommender Telefonanrufe für eine Teilnehmeranschlussleitung (VA1) eines Telekommunikationsnetzes (PSTN) während einer die Teilnehmeranschlussleitung (VA1) blockierenden Online-Datennetzwerk-Sitzung des Endgerätes (TERA), **dadurch gekennzeichnet, dass** das Endgerät (TERA) Empfangsmittel (TRTER) aufweist, die derart ausgestaltet sind, dass das Endgerät (TERA) von einem Diensterechner (SCP, GPTM) Instruktionen empfangen kann, die der Diensterechner (SCP, GPTM) zur Erbringung zumindest eines vorherbestimmten Dienstes zur Bearbeitung des ankommenden Anrufes an das Endgerät (TERA) mit Hilfe von Zugangsdaten versendet, die der Diensterechner (SCP, GPTM) von dem Endgerät (TERA) nach Aufbau einer Verbindung (VA11, VA1, VPOP) von dem Endgerät (TERA) über die Teilnehmeranschlussleitung (VA1) zu dem Online-Datennetzwerk (INT) erhalten hat, und dass das Endgerät (TERA) Ausführungsmittel (CPUTR, MEMTR) aufweist, die derart ausgestaltet sind, dass das Endgerät (TERA) die Instruktionen ausführen kann.

14. Zugangsdaten-Sende-Programm-Modul für ein Endgerät (TERA) zur Behandlung ankommender Telefonanrufe für eine Teilnehmeranschlussleitung (VA1) eines Telekommunikationsnetzes (PSTN) während einer die Teilnehmeranschlussleitung (VA1) blockierenden Online-Datennetzwerk-Sitzung des Endgerätes (TERA), wobei das Programm-Modul Programmcode enthält, der von einem Prozessor (CPUTR) in dem Endgerät (TERA) ausgeführt werden kann, **dadurch gekennzeichnet, dass** das Programm-Modul Empfangsmittel aufweist, die derart ausgestaltet sind, dass das Programm-Modul von einer Zugangseinrichtung (POP) eines Online-Datennetzwerkes (INT) aktuelle Zugangsdaten empfangen kann, welche die Zugangseinrichtung (POP) beim Aufbau einer Verbindung (VA11, VA1, VPOP) über die Teilnehmeranschlussleitung (VA1) zu dem Online-Datennetzwerk (INT) dem Endgerät (TERA) sendet, und dass das Programm-Modul Sendemittel aufweist, die derart ausgestaltet sind, dass das Programm-Modul die aktuellen Zugangsdaten an einen Diensterechner (SCP, GPTM) des Telekommunikationsnetzes senden kann, der mit Hilfe der Zugangsdaten zumindest einen vorherbestimmten Dienst zur Bearbeitung eines ankommenden Anrufes erbringen kann.

15. Programm-Modul für ein Endgerät (TERA) zur Behandlung ankommender Telefonanrufe für eine Teilnehmeranschlussleitung (VA1) eines Telekommunikationsnetzes (PSTN) während einer die Teilnehmeranschlussleitung (VA1) blockierenden Online-Datennetzwerk-Sitzung des Endgerätes (TERA), wobei das Programm-Modul Programmcode enthält, der von einem Prozessor (CPUTR) in dem Endgerät (TERA) ausgeführt werden kann, **dadurch gekennzeichnet, dass** das Programm-Modul Empfangsmittel aufweist, die derart ausgestaltet sind, dass das Programm-Modul von einem Diensterechner (SCP, GPTM) Instruktionen empfangen kann, die der Diensterechner (SCP, GPTM) zur Erbringung zumindest eines vorherbestimmten Dienstes zur Bearbeitung des ankommenden Anrufes an das Endgerät (TERA) mit Hilfe von Zugangsdaten versendet, die der Diensterechner (SCP, GPTM) von dem Endgerät (TERA) nach Aufbau einer Verbindung (VA11, VA1, VPOP) von dem Endgerät (TERA) über die Teilnehmeranschlussleitung (VA1) zu dem Online-Datennetzwerk (INT) erhalten hat, und dass das Programm-Modul Ausführungsmittel aufweist, die derart ausgestaltet sind, dass das Programm-Modul die Instruktionen ausführen kann.

16. Speichermittel mit einem Zugangsdaten-Sende-Programm-Modul nach Anspruch 11.

17. Speichermittel mit einem Programm-Modul nach Anspruch 12.
